(19) Europäisches Patentamt
European Patent Office
Office européen des brevets

(11) EP 0 712 901 B1

(12) **EUROPÄISCHE PATENTSCHRIFT**

(45) Veröffentlichungstag und Bekanntmachung des Hinweises auf die Patenterteilung:
**10.03.1999 Patentblatt 1999/10**

(51) Int Cl.$^6$: **C08L 69/00**, C08K 5/00, C08K 5/54, C08K 13/02

(21) Anmeldenummer: **95117318.6**

(22) Anmeldetag: **03.11.1995**

(54) **Flammwidrige Polycarbonatformmassen**

Flame retardant polycarbonate moulding compositions

Masses à mouler ignifugées à base de polycarbonate

(84) Benannte Vertragsstaaten:
**BE DE ES FR GB IT NL**

(30) Priorität: **15.11.1994 DE 4440684**

(43) Veröffentlichungstag der Anmeldung:
**22.05.1996 Patentblatt 1996/21**

(73) Patentinhaber: **BAYER AG**
**51368 Leverkusen (DE)**

(72) Erfinder:
- **Weider, Richard, Dr.**
**D-51381 Leverkusen (DE)**
- **Horn, Klaus, Dr.**
**D-41539 Dormagen (DE)**
- **Berg, Klaus, Dr.**
**D-47798 Krefeld (DE)**

(56) Entgegenhaltungen:
**EP-A- 0 019 212** **DE-A- 3 500 807**
**US-A- 4 335 038** **US-A- 4 954 549**

- **CHEMICAL ABSTRACTS, vol. 122, no. 26, 26.Juni 1995 Columbus, Ohio, US; abstract no. 316110, XP002002131 & JP-A-06 322 249 (FUKUBI KAGAKU KOGYO KK) 22.November 1994**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung sind Polycarbonatformmassen mit einem Gehalt

a) an Alkali oder Erdalkalisalzen von anorganischen Protonensäuren und/oder organischen Brönsted-Säuren mit mindestens einem Kohlenstoffatom, wobei die Salze keine Elemente aus der Gruppe Chlor, Brom oder Phosphor enthalten, in Mengen von 0,001 Gew.-% bis 1 Gew.-%, vorzugsweise in Mengen von 0,1 Gew.-% bis 0,7 Gew.-% und insbesondere von 0,1 Gew.-% bis 0,5 Gew.-% und

b) an Silicium-Verbindungen der Formel (I)

$$\left[R_1\right]_n - Si - \left[O - R_2\right]_{4-n}$$

worin

$R_1$ $C_8$-$C_{18}$-Alkyl (linear oder verzweigt), $C_6$-$C_{12}$-Cycloalkyl oder Alkylcycloalkyl, Phenyl oder $C_1$-$C_3$-Phenyl-alkyl, vorzugsweise $C_8$-$C_{18}$-Alkyl (linear oder verzweigt), Phenyl oder $C_1$-$C_3$-Phenyl-alkyl ist,

$R_2$ $C_1$-$C_4$-Alkyl (linear oder verzweigt) oder $C_1$-$C_3$-Phenyl-alkyl, vorzugsweise $C_1$-$C_4$-Alkyl (linear oder verzweigt) bedeutet,

n für eine ganze Zahl von 1 bis 2 steht

und bei mehreren Resten $R_1$ oder $R_2$ es sich um gleiche oder verschiedene Gruppen aus dem jeweiligen Bedeutungsumfang handeln kann,

in Mengen von 0,01 Gew.-% bis 10 Gew.-%, vorzugsweise von 0,1 Gew.-% bis 5 Gew.-%, insbesondere von 0,2 Gew.-% bis 3 Gew.-%, bezogen jeweils sowohl für Komponente a) und Komponente b) auf Gewicht an Polycarbonat.

Der Zusatz von Polysiloxanen zu Polycarbonaten ist seit langem bekannt (siehe beispielsweise US-PS 2 999 835). Flammwidrigkeit ist hierbei nicht angesprochen, sondern vielmehr Entformung und Verarbeitung (Spalte 7, Zeilen 16 bis 27 von US-PS 2 999 835).

Der Zusatz von Alkalisalzen zur Herstellung von flammwidrigen Polycarbonaten ist ebenfalls seit langem bekannt (siehe beispielsweise DE-OS 1 930 257 (Le A 12 278) und US-PS 3 775 367, DE-OS 2 049 358 (Le A 13 263) und US-PS 3 836 490 und DE-OS 2 149 311 (Le A 13 999) und GB-PS 1 370 744).

Aus der DE-OS 2 535 261 ist die Herstellung von flammwidrigen Polycarbonaten bekannt, wobei organische Alkalimetallsalze oder organische Erdalkalimetallsalze oder Mischungen derselben in Kombination mit Siloxanen zugesetzt werden.

Aus der EP-A2-0 392 252 (Le A 26 733) sind flammwidrige Polycarbonate bekannt; als Brandschutzadditive dienen sowohl Alkali- und Erdalkalisalze als auch Siloxane (siehe Seite 3, Zeilen 8 ff und Zeile 35).

Die dort beschriebenen oligomeren oder polymeren Siloxane führen bereits in geringster Dosierung zu starken Trübungen, die eine Verwendung für hochtransparente Formteile ausschließt. Bei Verwendung von oligomeren oder polymeren Siloxanen ist ebenfalls bekannt, daß sich im Fertigteil durch Abspaltung flüchtige, cyclische Siloxane bilden, die in elektrischen Geräten zu Kontaktschädigungen führen können.

Aus der DE-OS 2 744 016 sind ebenfalls flammhemmende Polycarbonate bekannt, die organische Alkalimetallsalze, organische Erdalkalimetallsalze oder deren Mischungen und Alkalimetall- oder Erdalkalimetallhalogenide oder organische Halogenide enthalten. Zusätzlich kann ein Siloxan enthalten sein, das die Flammwidrigkeit verbessert (Anspruch 15 der DE-OS).

Die dort beschriebenen oligomeren und polymeren Siloxane wirken nur in Kombination mit einem organischen Halogenid (vgl. Beispiel L', M', N' obiger Patentschrift) und führen allein in Kombination mit einem Salz zur Verschlechterung der Brandeigenschaften (Beispiel V, M').

Die DE-OS 2 918 882 (Le A 19 568) beschreibt flammwidrige Thermoplastmischungen, die organische Halogenverbindungen, Alkali- oder Erdalkalisalze sowie ein Antitropfmittel enthalten, als solches sind auch Polysiloxane geeignet.

Die DE-OS 2 918 883 (Le A 19 569) beschreibt ebenfalls flammwidrige Thermoplastmischungen, die organische Halogenverbindungen, Alkali- oder Erdalkalisalze und ein Antitropfmittel enthalten, als solches sind wiederum auch Polysiloxane geeignet.

Bei den hier angesprochenen Polysiloxanen handelt es sich um die gleichen Verbindungen wie in DE-OS 2 535 261.

US-PS 3 742 083 und US-PS 3 742 085 beschreiben die Kombination Salz und Siloxan als Zusatz zu Polycarbonaten zu einem anderen Zweck, nämlich zur Thermostabilisierung.

Es gibt noch eine Reihe von Literaturstellen, die auf den Zusatz von Si-Verbindungen abgestellt sind, wo aber erwähnt wird, daß Flammschutzmittel generell zugesetzt werden können (siehe beispielsweise DE-OS 2 510 463 (Le A 16 231), DE-OS 2 920 450 (Le A 19 566) bzw. US-PS 4 375 525, DE-OS 2 920 451 (Le A 16 231), DE-OS 3 933 545 (Le A 27 209), EP-A2-0 505 869 (Le A 28 228 + Le A 28 445) und EP-A2-0 507 178 (Le A 28 232).

Diese Literaturstellen beziehen sich ebenfalls auf die Thermostabilisierung mittels Si-Verbindungen.

Der Zusatz von strukturell ähnlichen Si-Verbindungen ist aus US-PS 4 804 692 (Mo 3005), der DE-OS 4 119 329 (Le A 28 242) und der DE-OS 4 127 079 (Le A 28 605) bekannt.

Hier dienen die Si-Verbindungen zur Stabilisierung von Polycarbonaten gegen die Einwirkung von $\gamma$-Strahlen. Flammschutz ist nicht angesprochen.

Aus JA-60-149 657 (übersetzt nur als Auszug vorliegend) sind Polycarbonatharze bekannt, die Kaliumphosphonate, aromatische Phosphite und Si-Verbindungen enthalten; die Polycarbonate sind frei von Halogensubstituenten. Als Si-Verbindung ist $CH_3$-Si-(O-Nonyl)$_3$ genannt.

Die so ausgerüsteten Polycarbonatharze sind flammwidrig und lassen sich ohne Verfärbung und ohne Erniedrigung des Molekulargewichts verarbeiten.

An JA-60-149 658 (übersetzt nur als Auszug vorliegend) sind Polycarbonatharze bekannt, die Kaliumphosphate, aromatische Phosphite, Si-Verbindungen und Glasfasern enthalten.

Die Polycarbonate haben verbesserte Flammwidrigkeit.

Als Si-Verbindung ist $CH_3$-Si-(O-Nonyl)$_3$ genannt.

Aus JA-60-186 559 (übersetzt nur als Auszug vorliegend) sind Polycarbonatharze bekannt, die Kaliumphosphonate, aromatische Phosphite, 4,4-Dihydroxydiphenylalkan-homo- oder co-oligomere und organische Si-Verbindungen enthalten. Die Polycarbonatharze sind flammwidrig. Als Si-Verbindungen sind Methyl-tri-secoctyloxysilan, Tetranonylsilikat und Tetratridecylsilikat genannt.

Die obigen 3 Patentschriften lehren, daß zum Erreichen der flammwidrigen Eigenschaften mindestens die Kombination eines organischen Kalium-Phosphats und eines Umesterungskatalysators (Phosphorigsäureester) erforderlich ist, daß auf die Silicium-Verbindung gegebenenfalls verzichtet werden kann (Mengenangaben Anspruch 1, Beispiele 1 bis 4 in JA 60-186 559), und daß ohne den Umesterungskatalysator keine ausreichende Wirkung erzielt wird. Es ist jedoch bekannt, daß Umesterungskatalysatoren, insbesondere Phosphite, ungünstige Einflüsse auf Polycarbonate haben, besonders eine verschlechterte Hydrolysefestigkeit bewirken und in elektrischen Anwendungen ebenfalls zu Kontaktschädigung durch freigesetzte Phosphorsäuren führen können. In allen Beispielen werden zudem chlor- oder bromhaltige Phosphate zugesetzt, wobei dem Fachmann bekannt ist, daß organische Chlor- und Bromverbindungen allein bereits einen starken flammwidrigen Effekt besitzen. Die beschriebenen Siliciumverbindungen, die durch einen am Silicium gebundenen Methylrest und große Alkoxyreste gekennzeichnet sind, besitzen zudem weitere Nachteile wie erhöhte Trübung des Polycarbonats und eine durch die geringe Verträglichkeit verursachte erhöhte Flüchtigkeit.

Es wurde nun überraschenderweise gefunden, daß man durch Verwendung spezieller Silicium-Verbindungen flammwidrige Polycarbonatformmassen mit einem überaus günstigen Eigenschaftsprofil herstellen kann, das sich dadurch auszeichnet, daß man hochtransparente, flammwidrige Formkörper ohne Verwendung von Phosphor-, Chlor- oder bromhaltigen Flammschutzmitteln herstellen kann. Insbesondere tritt die flammwidrige Wirkung der erfindungsgemäßen Silicium-Verbindungen ohne Verwendung zusätzlicher, zu unerwünschten Eigenschaftseinbußen führenden Umesterungskatalysatoren ein. Die erfindungsgemäßen Silicium-Verbindungen zeichnen sich zudem trotz ihres relativ niedrigen Siedepunktes durch eine überraschend geringe Flüchtigkeit aus.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-%, bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsummiert werden.

Die Herstellung der erfindungsgemäß zu verwendenden Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der

Dicarbonsäuren ersetzt werden, und zwar je nach Maßgabe der in den aromatischen Polycarbonaten zu ersetzenden Carbonatstruktureinheiten durch aromatische Dicarbonsäureesterstruktureinheiten.

Einzelheiten der Herstellung von Polycarbonaten sind in Hunderten von Patentschriften seit etwa 40 Jahren niedergelegt. Beispielhaft sei hier nur auf "Schnell", Chemistry an Physics of Polycarbonates", Polymer Reviews, Volume 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly (ester Carbonate) Copolymers" in Journal of Polymer Science, Polymer Chemistry Edition, Vol. 19, 75-90 (1980), auf D. Freitag, U. Grigo, P.R. Müller, N. Nonvertue', BAYER AG, "Polycarbonates" in Encyclopedia of Polymer Science and Engineering, Volume 11, Second Edition, 1988, Seiten 648-718 und schließlich auf Dres. U. Grigo, K. Kricher und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die thermoplastischen Polycarbonate einschließlich der thermoplastischen, aromatischen Polyestercarbonate haben mittlere Molekulargewichte $\overline{M}w$ (ermittelt durch Messung der relativen Viskosität bei 25°C in $CH_2Cl_2$ und einer Konzentration von 0,5 g pro 100 ml $CH_2Cl_2$) von 12 000 bis 120 000, vorzugsweise von 18 000 bis 80 000 und insbesondere von 22 000 bis 60 000.

Für die Herstellung der erfindungsgemäß zu verwendenden Polycarbonate geeignete Diphenole sind beispielsweise Hydrochinon. Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate wird nur ein Diphenol eingesetzt, im Falle der Copolycarbonate werden mehrere Diphenole eingesetzt.

Geeignete Kettenabbrecher sind sowohl Monophenole als auch Monocarbonsäuren. Geeignete Monophenole sind Phenol selbst, Alkylphenole wie Kresole, p-tert.- Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (III)

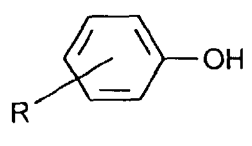

(III)

worin

R ein verzweigter oder unverzweigter $C_8$- und/oder $C_9$-Alkylrest ist.

Die Menge an einzusetzendem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2,

4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert.- Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3 -phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Einsatz der Carbonatgruppen durch die aromatischen Dicarbonsäureestergruppen erfolgt im wesentlichen stöchiometrisch und auch quantitativ, so daß das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate sind das bekannte Grenzflächenverfahren und das bekannte Schmelzumesterungsverfahren.

Im ersten Fall dient als Kohlensäurederivat vorzugsweise Phosgen, im letzteren Fall vorzugsweise Diphenylcarbonat. Katalysatoren, Lösungsmittel, Aufarbeitung, Reaktionsbedingungen etc. für die Polycarbonatherstellung sind in beiden Fällen hinreichend beschrieben und bekannt.

Geeignete Alkali- und/oder Erdalkalisalze im Sinne der Erfindung sind beispielsweise solche von anorganischen Protonsäure, wobei die Salze keine Elemente der Gruppe Chlor, Brom oder Phosphor enthalten dürfen. Anorganische Protonsäuren im Sinne der Erfindung sind Brönsted-Säuren, die Alkali- oder Erdalkalisalze bilden können (zum Ausdruck "Brönsted-Säure" vgl. Fieser & Fieser "Organic Chemistry", 1965, S. 595, Interscience Publishers N. Y., USA), wie z. B. Schwefelsäure oder Fluorwasserstoffsäure und Protonsäure komplexer Fluormetallverbindungen. Als derartige Alkali- oder Erdalkalisalze komplexer Fluormetallverbindungen können z. B. verwendet werden:

Hexafluoraluminate
Hexafluortitanate
Hexafluorantimonate
Hexafluorsilikate
Hexafluorwolframate
Hexafluorzirkonate
Tetrafluorborate

Geeignete Alkali- oder Erdalkalisalze organischer Säuren sind im Sinne der Erfindung solche von organischen Brönsted-Säuren mit mindestens einem Kohlenstoffatom, die Alkali- oder Erdalkalisalze bilden können, wobei die Salze keine Elemente der Gruppe Chlor, Brom oder Phosphor enthalten dürfen.

Solche gegebenenfalls substituierten organischen Säuren können OH- oder NH-acide Verbindungen sein, wie beispielsweise Carbonsäure, Sulfonsäure, NH-acide Sulfonamide oder Sulfonimide, mono- oder mehrfunktionelle Phenole oder Alkohole. Sie müssen mindestens ein C-Atom haben und können vorzugsweise zwischen 2 und 30 C-Atome enthalten.

Geeignete Alkalisalze sind die Li-, Na- und K-Salze. Geeignete Erdalkalisalze sind die Calcium-Salze.

Weitere geeignete Alkali- und/oder Erdalkalisalze im Sinne der Erfindung sind beispielsweise in den DOS 24 60 935, 24 60 944, 24 60 945, 24 60 946, 24 61 145, 25 35 261, 25 35 262, 25 35 263, 26 31 756, 26 43 256, 26 44 114, 26 45 415, 26 46 120, 26 47 271, 26 48 131, 26 53 327, 26 48 128, 27 44 015, 27 44 016, 27 44 017, 27 44 018, 27 45 592, 27 46 906 beschrieben.

Bevorzugte Salze sind die Alkalisalze und darunter wiederum die Li-, Na- und K-Salze.

Besonders bevorzugt sind Li-, Na- und K-Salze, die keine Elemente aus der gruppe Chlor, Brom oder Phosphor enthalten.
Die gemäß a) geeigneten Alkalisalze und Erdalkalisalze sollen vorzugsweise einen pH-Wert zwischen 5 und 9, insbesondere zwischen 6,5 und 7,5 haben, gemessen an 1 gew.-%igen Lösungen oder Suspensionen der Salze in Wasser bei 20°C.
Als Alkalisalze organischer Säuren seien beispielsweise genannt:

Natrium- oder Kaliumperfluorbutansulfat,
Natrium- oder Kaliumperfluormethansulfonat,
Natrium- oder Kalium-diphenylsulfon-sulfonat,
Natrium- oder Kalium-2-formylbenzolsulfonat,
Natrium- oder Kalium-(N-benzolsulfonyl)-benzolsulfonamid.

Als Alkalisalze anorganischer Säuren seien beispielsweise genannt:

Trinatrium- oder Trikalium-hexafluoroaluminat,
Dinatrium- oder Dikalium-hexafluorotitanat,
Dinatrium- oder Dikalium-hexafluorosilikat,
Dinatrium- oder Dikalium-hexafluorozirkonat,

Insbesondere geeignete Salze sind:

Natrium- oder Kalium-perfluorbutansulfonat,
Kalium-hexafluoroaluminat,
Natrium-hexafluoroaluminat,
Kalium-diphenylsulfon-sulfonat
Natrium-2-formylbenzolsulfonat
Natrium-(N-benzol sulfonyl)-b enzolsulfonamid.

Ebenfalls sind Mischungen der Salze untereinander geeignet.
Die erfindungsgemäßen Siliciumverbindungen an sich sind bekannt und können nach den üblichen, in der Literatur beschriebenen Verfahren hergestellt werden (siehe beispielsweise Houben-Weyl, Methoden der Organischen Chemie, Band XIII/5, Organo-Silicium-Verbindungen, Georg Thieme Verlag Stuttgart, New York, 1980, S. 199 ff).
Bevorzugte Beispiele für Silicium-Verbindungen der Formel (I) sind Octyl-trimethoxysilan, Octyl-triethoxysilan, i-Octyl-trimethoxysilan, i-Octyl-triethoxysilan, (2,4,4-Trimethyl-pentyl)-trimethoxysilan, (2,4,4-Trimethyl-pentyl)-triethoxysilan, Tetradecyl-trimethoxysilan, Tetradecyl-triethoxysilan, Hexadecyl-trimethoxysilan, Hexadecyl-triethoxysilan, Octadecyl-trimethoxysilan, Octadecyl-triethoxysilan, Phenyl-trimethoxysilan, Phenyl-triethoxysilan, Diphenyl-dimethoxysilan, Diphenyldiethoxysilan, Benzyl-trimethoxysilan, Benzyl-triethoxysilan, (2-Phenyl-ethyl)-trimethoxysilan, (2-Phenylethyl)-triethoxysilan, (2-Phenyl-propyl)-trimethoxysilan oder (2-Phenyl-propyl)-triethoxysilan. Besonders bevorzugt sind Octyl-trimethoxysilan, Octyl-triethoxysilan, Hexadecyl-trimethoxysilan, Hexadecyl-triethoxysilan, Diphenyl-dimethoxysilan oder Diphenyl-diethoxysilan.
Die Salze gemäß a) und die Silicium-Verbindungen gemäß b) können den Polycarbonaten entweder sukzessive oder simultan, während der Synthese der Polycarbonate oder nach der Synthese der Polycarbonate zugegeben werden; dies kann beispielsweise durch Vermischen der Polycarbonate mit den Zusätzen a) und b) bei Raumtemperatur und anschließende Schmelzcompoundierung bei 260°C bis 360°C, vorzugsweise bei 260°C bis 300°C, oder anschließende Schmelzextrusion bei 250°C bis 320°C, vorzugsweise bei 260°C bis 290°C erfolgen.
Die Herstellung der erfindungsgemäßen Formmassen kann auch in Lösung erfolgen, indem man die Polycarbonate, gelöst in einem Polycarbonatlösungsmittel, simultan oder sukzessive mit den Salzen gemäß a) und den Silicium-Verbindungen gemäß b) versetzt und das Polycarbonatlösungsmittel anschließend abdampft oder die Polycarbonatlösung zu Folien vergießt.
Gegenstand der vorliegenden Erfindung ist somit auch ein Verfahren zur Herstellung der erfindungsgemäßen Polycarbonatformmassen, das dadurch gekennzeichnet ist, daß man Polycarbonate mit den Salzen gemäß Komponente a) und mit den Silicium-Verbindungen gemäß Komponente b) entweder simultan oder sukzessive, entweder in Substanz oder in Lösung vermischt, und danach die Gemische entweder bei Temperaturen zwischen 260°C und 360°C schmelzcompoundiert oder bei Temperaturen zwischen 250°C und 320°C schmelzextrudiert, oder die Polycarbonatlösungen eindampft und das erhaltene Gemisch granuliert, oder die Polycarbonatlösungen, gegebenenfalls nach Aufkonzentrierung, zu Folien vergießt.
Die erfindungsgemäßen Polycarbonatformmassen können noch die üblichen Additive wie Glasfasern, Füllstoffe, Pigmente, UV-Stabilisatoren, Antioxidantien und Entformungsmittel enthalten, in den für thermoplastische Polycarbonate üblichen Mengen.

Gegenstand der vorliegenden Erfindung sind somit auch die erfindungsgemäßen Polycarbonatformmassen, die dadurch gekennzeichnet sind, daß sie außer den zugesetzten Komponenten a) und b) noch mindestens ein Additiv ausgewählt aus Glasfasern, Füllstoffen, Pigmenten, UV-Stabilisatoren, Antioxidantien und Entformungsmitteln enthalten.

Diese üblichen Additive können in bekannter Weise zusammen mit den Komponenten a) und/oder b) oder danach den flammwidrig auszurüstenden Polycarbonaten zugesetzt werden.

Gegenstand der vorliegenden Erfindung ist somit auch die Erweiterung des erfindungsgemäßen Verfahrens, das dadurch gekennzeichnet ist, daß man mindestens ein Additiv ausgewählt aus Glasfasern, Füllstoffen, Pigmenten, UV-Stabilisatoren, Antioxidantien und Entformungsmitteln zusammen mit den Komponenten a) und/oder b) oder danach den flammwidrig auszurüstenden Polycarbonaten zusetzt.

Die erfindungsgemäßen Polycarbonatformmassen können auf den üblichen Verarbeitungsmaschinen nach bekannten Methoden unter den für Polycarbonat üblichen Verarbeitungsparametern zu flammfesten Formkörpern und Folien verarbeitet werden.

Die Formmassen eignen sich bevorzugt für Spritzguß- und Extrusionsartikel, an die erhöhte Anforderungen bezüglich Flammfestigkeit gestellt werden.

Die Formteile finden beispielsweise Anwendung im Elektro-, Elektronik-, Bau-, Fahrzeug- und/oder Flugzeugsektor.

## Beispiele

Die Mengenangaben in den Beispielen, ausgedrückt in Gew.-%, beziehen sich auf das Gewicht der Gesamtmischung.

### Beispiele 1 bis 5

Ein aromatisches Polycarbonat aus 2,2-Bis-(4-hydroxyphenyl)-propan (Schmelz- index 8, gemessen nach DIN 53 735) mit Phenol als Kettenabbrecher wurde bei 280°C auf einem Doppelwellenextruder aufgeschmolzen. Dann dosierte man eine Mischung aus 0,1 Gew.-%Perfluorbutansulfonsäure-Kaliumsalz und 0,5 Gew.-% Siliciumverbindung direkt in die Polycarbonatschmelze. Der Polymerstrang wird gekühlt und granuliert. Das Granulat wird im Vakuumtrokkenschrank bei 80°C getrocknet und auf einer Spritzgußmaschine bei 280°C zu Prüfkörpern mit den Abmessungen 127 x 12 x 2,6 mm verspritzt.

Jeweils 10 Prüfstäbe werden dann einer Brennbarkeitsprüfung gemäß Vorschrift UL 94 (Brennbarkeit fester Kunststoffproben, Underwriter Laboratories) unterworfen.

An Farbmusterplättchen mit den Abmessungen 60 x 40 x 4 mm wurde aus den nach DIN 5033 gemessenen Normfarbwerten die Trübung nach ASTM-D 1003 errechnet.

Zur Prüfung der Flüchtigkeit wurde der Silicium-Gehalt in einem UL 94-Prüfstab durch Auflösen in Morpholin/$CCl_4$ und emissionsspektrometrische Messung der Si-Linie bei 288,15 nm (DCP-Emissionsspektrometer Typ SS-7 DCP, Fa. ARL) bestimmt.

| Nr. | Si-Verbindung | Molekulargewicht | UL 94 | Trübung % | Si-Gehalt ppm |
|---|---|---|---|---|---|
| 1 | Octyl-triethoxysilan | 276 | 10 mal V0 | 4,6 | 169 |
| 2 | Diphenyl-dimethoxysilan | 244 | 10 mal V0 | 3,9 | 334 |
| 3 Vergleich | Methyl-trinonyloxysilan | 472 | 8 mal V0<br>2 mal V2 | 7 | 98 |
| 4 Vergleich | 3-Glycidoxypropyltrimethoxysilan | 236 | 4 mal V0<br>1 mal V1<br>5 mal V2 | n.b. | n.b. |
| 5 Vergleich | Tetra(butoxyethoxy)silan | 496 | 7 mal V0<br>1 mal V1<br>2 mal V2 | n.b. | 148 |

Die erfindungsgemäßen Si-Verbindungen sind ohne Umesterungskatalysatoren hochwirksam, zeigen hohe Transparenz und sind trotz ihres kleineren Molekulargewichts weniger flüchtig als z.B. die vorbeschriebene Verbindung aus Beispiel 3.

**Beispiele 6 bis 8**

Ein aromatisches Polycarbonat aus 2,2-Bis-(4-hydroxyphenyl)-propan (Schmelz- index 2, gemessen nach DIN 53 735) mit Phenol als Kettenabbrecher wurde bei 280°C auf einem Doppelwellenextruder aufgeschmolzen. Dann dosierte man eine Mischung aus 0,15 Gew.-% Diphenylsulfon-sulfonsäure-Kaliumsalz und 0,25 Gew.-% Siliciumverbindung (im Vergleichsbeispiel 8 0,5 Gew.-% organische Chlorverbindung statt der Si-Verbindung) direkt in die Polycarbonatschmelze. Der Polymerstrang wird gekühlt und granuliert. Das Granulat wird im Vakuumtrockenschrank bei 80°C getrocknet und auf einer Spritzgußmaschine bei 280°C zu Prüfkörpern mit den Abmessungen 127 x 12 x 2,4 mm verspritzt.

Jeweils 10 Prüfstäbe werden dann einer Brennbarkeitsprüfung gemäß Vorschrift UL 94 (Brennbarkeit fester Kunststoffproben, Underwriter Laboratories) unterworfen.

| Nr. | Si-Verbindung | UL 94 |
|---|---|---|
| 6 | Octyl-triethoxysilan | 10 mal V0 |
| 7 | Diphenyl-dimethoxysilan | 10 mal V0 |
| 8 Vergleich | Hexamethylen-bis-tetrachlorphthalimid | 10 mal V0 |

Die erfindungsgemäßen Si-Verbindungen verleihen auch dünnwandigen Formkörpern hohe Flammwidrigkeit und erreichen trotz niedrigerer Dosierung die Wirkung von Organochlorverbindungen.

**Beispiele 9 bis 11**

Ein strukturviskoses aromatisches Polycarbonat aus 2,2-Bis-(4-hydroxyphenyl)propan (Schmelzindex 2 bis 3, gemessen nach DIN 53 735) mit Phenol als Kettenabbrecher und 3,3-Bis-(3-methyl-4-hydroxyphenyl)-2-oxo-2,3-dihydroindol als Verzweiger wurde bei 280°C auf einem Doppelwellenextruder aufgeschmolzen. Dann dosierte man eine Mischung aus 0,15 Gew.-% Diphenylsulfon-sulfonsäure-Kaliumsalz und 0,25 Gew.-% Siliciumverbindung (im Vergleichsbeispiel 11 0,5 Gew.-% organische Chlorverbindung statt der Si-Verbindung) direkt in die Polycarbonatschmelze. Der Polymerstrang wird gekühlt und granuliert. Das Granulat wird im Vakuumtrockenschrank bei 80°C getrocknet und auf einer Spritzgußmaschine bei 280°C zu Prüfkörpern mit den Abmessungen 127 x 12 x 2,4 mm verspritzt.

Jeweils 10 Prüfstäbe werden dann einer Brennbarkeitsprüfung gemäß Vorschrift UL 94 (Brennbarkeit fester Kunststoffproben, Underwriter Laboratories) unterworfen.

| Nr. | Si-Verbindung | UL 94 |
|---|---|---|
| 9 | Octyl-triethoxysilan | 10 mal V0 |
| 10 | Diphenyl-dimethoxysilan | 10 mal V0 |
| 11 Vergleich | Hexamethylen-bis-tetrachlorphthalimid | 10 mal V0 |

Die erfindungsgemäßen Si-Verbindungen verleihen auch dünnwandigen Formkörpern hohe Flammwidrigkeit und erreichen trotz niedrigerer Dosierung die Wirkung von Organochlorverbindungen.

**Patentansprüche**

**1.** Polycarbonatformmassen mit einem Gehalt

a) an Alkali- oder Erdalkalisalzen von anorganischen Protonensäuren und/oder organischen Brönsted-Säuren mit mindestens einem Kohlenstoffatom in Mengen von 0,001 Gew.-% bis 1 Gew.-%, wobei diese Salze keine Elemente aus der Gruppe Chlor, Brom oder Phosphor enthalten, und

b) an Silicium-Verbindungen der Formel (I)

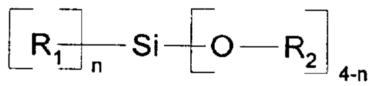

worin

$R_1$ $C_8$-$C_{18}$-Alkyl (linear oder verzweigt), $C_6$-$C_{12}$-Cycloalkyl oder Alkylcycloalkyl, Phenyl oder $C_1$-$C_3$-Phenylalkyl,

$R_2$ $C_1$-$C_4$-Alkyl (linear oder verzweigt) oder $C_1$-$C_3$-Phenylalkyl bedeutet,

n für eine ganze Zahl von 1 bis 2 steht,

und bei mehreren Resten $R_1$ oder $R_2$ es sich um gleiche oder verschiedene Gruppen aus dem jeweiligen Bedeutungsumfang handeln kann,

in Mengen von 0,01 Gew.-% bis 10 Gew.-%, bezogen jeweils sowohl für Komponente a) und Komponente b) auf Gewicht an Polycarbonat.

**2.** Polycarbonatformmassen gemäß Anspruch 1, dadurch gekennzeichnet, daß Komponente b) Silicium-Verbindungen der Formel (I) sind, wobei

$R_1$ $C_8$-$C_{18}$-Alkyl (linear oder verzweigt), Phenyl oder $C_1$-$C_3$-Phenyl-alkyl ist,

$R_2$ $C_1$-$C_4$-Alkyl (linear oder verzweigt) bedeutet,

n für eine ganze Zahl von 1 bis 2 steht

und bei mehreren Resten $R_1$ oder $R_2$ es sich um gleiche oder verschiedene Gruppen aus dem jeweiligen Bedeutungsumfang handeln kann.

**3.** Polycarbonatformmassen gemäß Anspruch 1, dadurch gekennzeichnet, daß Komponente b) eine Silicium-Verbindung aus der Gruppe Octyl-trimethoxysilan, Octyl-triethoxysilan, i-Octyl-trimethoxysilan, i-Octyl-triethoxysilan, (2,4,4-Trimethyl-pentyl)-trimethoxysilan, (2,4,4-Trimethyl-pentyl)-triethoxysilan, Tetradecyl-trimethoxysilan, Tetradecyl-triethoxysilan, Hexadecyl-trimethoxysilan, Hexadecyl-triethoxysilan, Octadecyl-trimethoxysilan, Octadecyl-triethoxysilan, Phenyl-trimethoxysilan, Phenyl-triethoxysilan, Diphenyl-dimethoxysilan, Diphenyl-diethoxysilan, Benzyl-trimethoxysilan, Benzyl-triethoxysilan, (2-Phenyl-ethyl)-trimethoxysilan, (2-Phenylethyl)-triethoxysilan, (2-Phenyl-propyl)-trimethoxysilan oder (2-Phenylpropyl)-triethoxysilan ist.

**4.** Polycarbonatformmassen gemäß Anspruch 1, dadurch gekennzeichnet, daß Komponente b) Octyl-trimethoxysilan, Octyl-triethoxysilan, Hexadecyl-trimethoxysilan, Hexadecyl-triethoxysilan, Diphenyl-dimethoxysilan oder Diphenyl-diethoxysilan ist.

**5.** Polycarbonatformmassen gemaß Anspruch 1, dadurch gekennzeichnet, daß Komponente b) Diphenyl-dimethoxysilan oder Diphenyl-diethoxysilan ist.

**6.** Polycarbonatformmassen gemäß Ansprüchen 1 bis 5, dadurch gekennzeichnet, daß sie zusätzlich noch mindestens ein Additiv, ausgewählt aus Glasfasern, Füllstoffen, Pigmenten, UV-Stabilisatoren, Antioxydantien, Entformungsmitteln enthalten.

**7.** Verfahren zur Herstellung von Polycarbonatformmassen der Ansprüche 1 bis 5, das dadurch gekennzeichnet ist, daß man Polycarbonate mit den Salzen gemäß Komponente a) und mit den Silicium-Verbindungen gemäß Komponente b) entweder sukzessive oder simultan, entweder in Substanz oder in Lösung vermischt, und danach die Gemische entweder bei Temperaturen zwischen 260°C bis 360°C schmelzcompoundiert oder bei .Temperaturen zwischen 250°C bis 320°C, schmelzextrudiert, oder die Polycarbonatlösung eindampft und das erhaltene Gemisch granuliert, oder die Polycarbonatlösungen, gegebenenfalls nach Aufkonzentrierung, zu Folien vergießt.

**8.** Verfahren gemäß Anspruch 7 zur Herstellung der Polycarbonatformmassen des Anspruchs 6,dadurch gekennzeichnet, daß man mindestens ein Additiv ausgewählt aus Glasfasern, Füllstoffen, Pigmenten, UV-Stabilisatoren, Antioxydantien, und Entformungsmitteln zusammen mit den Komponenten a) und/oder b) oder danach den Polycarbonaten zusetzt.

**Claims**

**1.** Polycarbonate moulding compositions with a concentration

a) of alkali metal or alkaline earth metal salts of inorganic protonic acids and/or organic Brönsted acids with at least one carbon atom in amounts of 0.001 wt.% to 1 wt.%, wherein these salts do not contain any elements from the group chlorine, bromine and phosphorus, and

b) of silicon compounds of the formula (I)

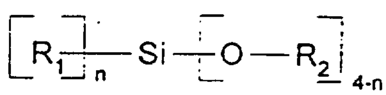

in which

$R_1$ represents a $C_8$-$C_{18}$-alkyl (linear or branched), $C_6$-$C_{12}$-cycloalkyl or alkylcycloalkyl, phenyl or $C_1$-$C_3$-phenylalkyl group,

$R_2$ represents a $C_1$-$C_4$-alkyl (linear or branched) or $C_1$-$C_3$-phenylalkyl group,

n is an integer from 1 to 2,

and if there are several $R_1$ or $R_2$ groups, these may be identical or different, each being defined in the same way as given above,

in amounts of 0.01 wt.% to 10 wt.%, with respect, for each of component a) and component b), to the weight of polycarbonate.

**2.** Polycarbonate moulding compositions according to Claim 1, characterised in that components b) are silicon compounds of the formula (I), wherein

$R_1$ represents a $C_8$-$C_{18}$-alkyl (linear or branched), phenyl or $C_1$-$C_3$-phenylalkyl group,

$R_2$ represents a $C_1$-$C_4$-alkyl (linear or branched) group,

n is an integer from 1 to 2

and if there are several $R_1$ or $R_2$ groups, these may be identical or different, each being defined in the same way as given above.

**3.** Polycarbonate moulding compositions according to Claim 1, characterised in that component b) is a silicon compound from the group octyl-trimethoxysilane, octyltriethoxysilane, i-octyl-trimethoxysilane, i-octyltriethoxysilane, (2,4,4-trimethyl-pentyl)trimethoxysilane, (2,4,4-trimethyl-pentyl)triethoxysilane, tetradecyl-trimethoxysilane, tetradecyl-triethoxysilane, hexadecyltrimethoxysilane, hexadecyl-triethoxysilane, octadecyl-trimethoxysilane, octadecyl-triethoxysilane, phenyl-trimethoxysilane, phenyl-triethoxysilane, diphenyl-dimethoxysilane, diphenyl-diethoxysilane, benzyl-trimethoxysilane, benzyl-triethoxysilane, (2-phenyl-ethyl)-trimethoxysilane, (2-phenyl-ethyl)triethoxysilane, (2-phenyl-propyl)-trimethoxysilane or (2-phenyl-propyl)-triethoxysilane.

**4.** Polycarbonate moulding compositions according to Claim 1, characterised in that component b) is octyltrimethoxysilane, octyl-triethoxysilane, hexadecyl-trimethoxysilane, hexadecyl-triethoxysilane, diphenyldimethoxysilane or diphenyl-diethoxysilane.

**5.** Polycarbonate moulding compositions according to Claim 1, characterised in that component b) is diphenyldimethoxysilane or diphenyl-diethoxysilane.

**6.** Polycarbonate moulding compositions according to Claims 1 to 5, characterised in that they also contain at least one additive, selected from glass fibres, fillers, pigments, UV stabilisers, antioxidants, mould release agents.

**7.** A process for preparing polycarbonate moulding compositions according to Claims 1 to 5 which is characterised in that polycarbonates are mixed with salts in accordance with component a) and with the silicon compounds in accordance with component b), either successively or in simultaneously, either in bulk or in solution, and then the mixture is either melt compounded at temperatures between 260°C and 360°C or is melt-extruded at temperatures between 250°C and 320°C, or the polycarbonate solution is evaporated and the mixture obtained is granulated, or the polycarbonate solutions, optionally after being concentrated, are poured out to form films.

**8.** A process according to Claim 7 for preparing the polycarbonate moulding compositions in Claim 6, characterised that at least one additive selected from glass fibres, fillers, pigments, UV stabilisers, antioxidants and mould release agents are added to the polycarbonates together with components a) and/or b) or afterwards.

**Revendications**

**1.** Matières à mouler à base de polycarbonates contenant

a) des sels de métaux alcalins ou de métaux alcalino-terreux d'acides protoniques inorganiques et/ou d'acides organiques de Bronsted contenant au moins un atome de carbone, dans des quantités de 0,001% en poids à 1% en poids, ces sels ne contenant aucun élément choisi parmi le groupe comprenant le chlore, le brome ou le phosphore, et

b) des composés de silicium répondant à la formule (I)

$$\left[R_1\right]_n Si \left[O-R_2\right]_{4-n}$$

dans laquelle

$R_1$ représente un groupe alkyle en $C_8$-$C_{18}$ (à chaîne droite ou ramifiée), un groupe cycloalkyle en $C_6$-$C_{12}$ ou un groupe alkylcycloalkyle, un groupe phényle ou un groupe phénylalkyle en $C_1$-$C_3$,

$R_2$ représente un groupe alkyle en $C_1$-$C_4$ (à chaîne droite ou ramifiée) ou un groupe phénylalkyle en $C_1$-$C_3$,

n représente un nombre entier de 1 à 2,

et, dans le cas de plusieurs radicaux $R_1$ ou $R_2$, il peut s'agir de groupes identiques ou différents correspondant à la portée de signification respective,

dans des quantités de 0,01% en poids à 10% en poids respectivement rapportées, aussi bien pour le composant a) que pour le composant b), au poids du polycarbonate.

**2.** Matières à mouler à base de polycarbonates selon la revendication 1, caractérisées en ce que le composant b) représente des composés de silicium répondant à la formule (I) dans laquelle

$R_1$ représente un groupe alkyle en $C_8$-$C_{18}$ (à chaîne droite ou ramifiée), un groupe phényle ou un groupe

phénylalkyle en $C_1$-$C_3$,

$R_2$ représente un groupe alkyle en $C_1$-$C_4$ (à chaîne droite ou ramifiée),

n représente un nombre entier de 1 à 2,

et, dans le cas de plusieurs radicaux $R_1$ ou $R_2$, il peut s'agir de groupes identiques ou différents correspondant à la portée de signification respective.

**3.** Matières à mouler à base de polycarbonates selon la revendication 1, caractérisées en ce que le composant b) représente un composé de silicium choisi parmi le groupe comprenant l'octyltriméthoxysilane, l'octyltriéthoxysilane, le i-octyltriméthoxysilane, le i-octyltriéthoxysilane, le (2,4,4-triméthyl-pentyl)-triméthoxysilane, le (2,4,4-triméthyl-pentyl)-triéthoxysilane, le tétradécyl-triméthoxysilane, le tétradécyl-triéthoxysilane, l'hexadécyl-triméthoxysilane, l'hexadécyl-triéthoxysilane, l'octadécyltriméthoxysilane, l'octadécyl-triéthoxysilane, le phényl-triméthoxysilane, le phényl-triéthoxysilane, le diphényl-diméthoxysilane, le diphényl-diéthoxysilane, le benzyl-triméthoxysilane, le benzyl-triéthoxysilane, le (2-phényl-éthyl)triméthoxysllane, le (2-phényl-éthyl)-triéthoxysilane, le (2-phényl-propyl)-triméthoxysilane ou le (2-phényl-propyl)-triéthoxysilane.

**4.** Matières à mouler à base de polycarbonates selon la revendication 1, caractérisées en ce que le composant b) représente l'octyl-triméthoxysilane, l'octyl-triéthoxysilane, l'hexadécyl-triméthoxysilane, l'hexadécyl-triéthoxysilane, le diphényl-diméthoxysilane ou le diphényl-diéthoxysilane.

**5.** Matières à mouler à base de polycarbonates selon la revendication 1, caractérisées en ce que le composant b) représente le diphényl-diméthoxysilane ou le diphényl-diéthoxysilane.

**6.** Matières à mouler à base de polycarbonates selon les revendications 1 à 5, caractérisées en ce qu'elles contiennent en outre au moins un additif choisi parmi le groupe comprenant des fibres de verre, des substances de charge, des pigments, des stabilisateurs contre l'effet du rayonnement UV, des antioxydants, des agents de démoulage.

**7.** Procédé pour la préparation de matières à mouler à base de polycarbonates selon les revendications 1 à 5, qui se caractérise en ce qu'on mélange des polycarbonates avec les sels selon le composant a) et avec les composés de silicium selon le composant b), soit de manière successive, soit de manière simultanée, soit en masse, soit en solution, et ensuite, on soumet les mélanges, soit à un mélangeage intime en fusion à des températures entre 260°C à 360°C, soit à une extrusion en fusion à des températures entre 250°C à 32C°C, ou bien on évapore la solution de polycarbonate et on granule le mélange obtenu ou encore on verse les solutions de polycarbonates, le cas échéant après concentration, pour obtenir des feuilles minces.

**8.** Procédé selon la revendication 7 pour la préparation des matières à mouler à base de polycarbonates selon la revendication 6, caractérisé en ce qu'on ajoute aux polycarbonates au moins un additif choisi parmi le groupe comprenant des fibres de verre, des substances de charge, des pigments, des stabilisateurs contre l'effet du rayonnement UV, des antioxydants et des agents de démoulage, de manière conjointe avec les composants a) et/ou b) ou par la suite.